# EUROPÄISCHE PATENTSCHRIFT

(11) **EP 4 330 634 B1**
(45) Veröffentlichungstag und Bekanntmachung des Hinweises auf die Patenterteilung: **29.07.2026**
(21) Anmeldenummer: 22723579.3
(22) Anmeldetag: 19.04.2022
(51) Int. Cl.: G01C 21/36, G08G 1/00

(54) **VERFAHREN ZUM BEREITSTELLEN EINER ZIELFÜHRUNG, FAHRERASSISTENZSYSTEM UND KRAFTFAHRZEUG**
METHOD FOR PROVIDING ROUTE GUIDANCE, DRIVER ASSISTANCE SYSTEM, AND MOTOR VEHICLE
PROCÉDÉ POUR PERMETTRE UN GUIDAGE VERS UNE DESTINATION, SYSTÈME D'ASSISTANCE AU CONDUCTEUR ET VÉHICULE AUTOMOBILE

(30) Priorität: 26.04.2021 DE 102021204135
(43) Veröffentlichungstag der Anmeldung: 06.03.2024
(73) Patentinhaber: Volkswagen Aktiengesellschaft, 38440 Wolfsburg (DE)
(72) Erfinder: CULLMANN, Jaqueline, 38110 Braunschweig (DE); SCHETTLER, Julia, 38518 Gifhorn (DE); VARNHORN, Marcel, 29399 Wahrenholz (DE)
(86) Internationale Anmeldenummer: PCT/EP2022/060220
(87) Internationale Veröffentlichungsnummer: WO 2022/228931

(56) Entgegenhaltungen:
- US-A1- 2007 061 071

## Beschreibung

Die Erfindung betrifft ein Verfahren zum Bereitstellen einer Zielführung für einen Fahrer eines Kraftfahrzeugs entlang einer bereitgestellten Navigationsroute von einem Start zu einem Ziel, wobei überprüft wird, ob sich das Kraftfahrzeug in gemäß einem vorgegeben Kriterium vorbestimmter Nähe zum Ziel befindet und falls das Überprüfen ergibt, dass sich das Kraftfahrzeug gemäß dem vorgegebenen Kriterium in der vorbestimmten Nähe zum Ziel befindet, eine Information an den Fahrer ausgegeben wird. Die Erfindung betrifft auch ein Fahrerassistenzsystem und ein Kraftfahrzeug.

Aus dem Stand der Technik sind Navigationssysteme bekannt, die einen Fahrer eines Kraftfahrzeugs von einem Start, wie zum Beispiel dem aktuellen Standort des Kraftfahrzeugs, zu einem Ziel, welches vom Fahrer vorgegeben werden kann, navigieren. Hat das Kraftfahrzeug zum Beispiel das Ziel erreicht, so kann dem Fahrer eine Information ausgegeben werden, dass das Ziel erreicht wurde beziehungsweise sich das Kraftfahrzeug in unmittelbarer Nähe des Ziels befindet. Üblicherweise wird dann die Navigation nach Erreichen des Zielorts beendet.

Gemäß der US 8,589,068 B2 kann ein Benutzer auf Einrichtungen aufmerksam gemacht werden, die sich in der Nähe einer Route zu einem Ziel befinden. Die US 10,663,306 B2 beschreibt ein Navigationssystem, welches eine Zielführung von einem Startort zu einem Zielort ausführt. Dabei wird die Zielführung beendet, wenn das Fahrzeug am Zielort angekommen ist. Wird festgestellt, dass sich das Fahrzeug wieder vom Zielort entfernt und diesem daraufhin wieder nähert, wird die Zielführung wieder aufgenommen. Gemäß der US 2019/0368888 A1 wird eine Restroute zu einem Navigationsziel ermittelt, sowie auch Schlüsselpunkte, die im Bereich dieser verbleibenden Restroute positioniert sind. Anschließend werden ein Kartenausschnitt mit der restlichen Route und die in diesem Bereich ermittelten Schlüsselpunkte angezeigt.

Die US 2007/0061071 A1 beschreibt ein Navigationssystem, gemäß welchem zunächst eine Route von einem Startpunkt bis zu einem Zielpunkt ermittelt werden kann. Außerdem kann hierbei auch ein bestimmter Bereich ermittelt werden, für den keine Routenführung erwünscht ist. Das Navigationssystem setzt dann einen Führungs-Startpunkt und einen Führungs-Endpunkt für die Route unter Berücksichtigung dieses bestimmten Bereiches fest.

Aufgabe der vorliegenden Erfindung ist es, ein Verfahren, ein Fahrerassistenzsystem und ein Kraftfahrzeug bereitzustellen, die es ermöglichen, für einen Fahrer im Rahmen einer Navigation eine Zielführung bereitzustellen, die möglichst gut an die Bedürfnisse des Fahrers angepasst ist.

Diese Aufgabe wird gelöst durch ein Verfahren, ein Fahrerassistenzsystem und ein Kraftfahrzeug mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figuren.

Bei einem erfindungsgemäßen Verfahren zum Bereitstellen einer Zielführung für einen Fahrer eines Kraftfahrzeugs entlang einer bereitgestellten Navigationsroute von einem Start zu einem Ziel wird überprüft, ob sich das Kraftfahrzeug in gemäß einem vorgebbaren Kriterium vorbestimmter Nähe zum Ziel befindet, und falls das Überprüfen ergibt, dass sich das Kraftfahrzeug gemäß dem vorgegebenen Kriterium in der vorbestimmten Nähe zum Ziel befindet, wird eine Information an den Fahrer ausgegeben. Dabei umfasst die an den Fahrer ausgegebene Information eine Eingabeaufforderung an den Fahrer zur vorzeitigen Beendigung der Zielführung, und falls eine bestimmte Eingabe des Fahrers zur vorzeitigen Beendigung der Zielführung erfasst wird, wird die Zielführung beendet. Dabei umfasst das vorgegebene Kriterium, dass eine prognostizierte Fahrzeit des Kraftfahrzeugs von einer aktuellen Position des Kraftfahrzeugs zum Ziel entlang der Navigationsroute kleiner ist als ein vorgebbarer Zeitschwellwert.

Befindet sich der Fahrer des Kraftfahrzeugs in einer aktiven Routenführung beziehungsweise Navigation und ist seinem Ziel nach dem vorgebbaren Kriterium nahe, so kann dem Fahrer vorteilhafterweise durch die ausgegebene Eingabeaufforderung der Vorschlag gemacht werden, die Navigation vorzeitig zu beenden, selbst dann, wenn das Kraftfahrzeug das Ziel noch nicht erreicht hat. Dies basiert auf der Erkenntnis, dass davon auszugehen ist, dass sich ein Fahrer bei bekannten Zielen kurz vor dem Ziel örtlich auskennt und keine aktive Routenführung mehr benötigt. Durch einen solchen Bedienvorschlag, der durch die ausgegebene Eingabeaufforderung bereitgestellt wird, können somit dem Fahrer vorteilhafterweise Bedienschritte abgenommen werden. Hierdurch kann der Komfort bei der Zielführung für einen Fahrer deutlich gesteigert werden.

Die Zielführung kann grundsätzlich in üblicher Weise von einem Navigationssystem des Kraftfahrzeugs bereitgestellt werden. Dieses kann auf Basis eines vorgegebenen Ziels und eines vorgegebenen Startpunkts eine oder mehrere Navigationsrouten vom Start zum Ziel ermitteln. Optional kann der Fahrer dann eine gewünschte Route nach seinen Kriterien auswählen und die Navigation starten. Der Startpunkt einer solchen Navigationsroute, der vorliegend kurz als Start bezeichnet wird, kann dabei zum Beispiel auf einfache Weise durch die aktuelle Position des Kraftfahrzeugs vorgegeben sein. Die Position des Kraftfahrzeugs wird dabei durch zum Beispiel ein satellitenbasiertes Positionsbestimmungssystem, wie zum Beispiel GPS (Global Positioning System), des Kraftfahrzeugs bereitgestellt. Der Zielort, der vorliegend einfach als Ziel bezeichnet wird, kann zum Beispiel von einem Benutzer in das Navigationssystem eingegeben werden, zum Beispiel durch Auswahl eines bestimmten Ortes in einer Karte, durch Eingabe einer Adresse oder eines Sonderziels oder ähnliches. Während sich das Kraftfahrzeug im Rahmen der Zielführung entlang der Navigationsroute bewegt, werden vom Navigationssystem Navigationshinweise ausgegeben. Diese betreffen vor allem Anweisungen, welcher Weg an möglichen Abzweigungen zu wählen ist. Solche Navigationshinweise sowie auch die Navigationsroute oder zumindest Teile davon können dabei auf einer Anzeigeeinrichtung des Kraftfahrzeugs, zum Beispiel einem Display, dem Fahrer angezeigt werden und/oder akustisch ausgegeben werden. Wie oben bereits erwähnt, soll das Ausgeben der Eingabeaufforderung an den Fahrer zur frühzeitigen Beendigung der Zielführung auch nur dann ausgegeben werden, wenn aktuell eine Zielführung aktiviert ist.

Die Eingabeaufforderung an den Fahrer zur vorzeitigen Beendigung der Zielführung soll dabei insbesondere ausgegeben werden, ohne dass der Fahrer zu diesem Zweck, das heißt zur vorzeitigen Beendigung der Zielführung, vorab irgendwelche Bedienhandlungen im Navigationsmenü oder der Navigationsanzeige ausführen muss. Mit anderen Worten ist es also besonders vorteilhaft, wenn die Eingabeaufforderung unabhängig von einer vorhergehenden Benutzereingabe zum Beenden der Zielführung ausgegeben wird. Es soll also gerade nicht vorgesehen sein, dass der Benutzer zunächst irgendeinen Menüpunkt zum Beenden der Navigation auswählen muss und erst dann gefragt wird, ob die Zielführung vorzeitig beendet werden soll. Dadurch, dass die Eingabeaufforderung an den Fahrer zur vorzeitigen Beendigung der Zielführung automatisch nach Erfülltsein des vorbestimmten Kriteriums ausgegeben wird, können gerade, wie oben beschrieben, zusätzliche Bedienschritte durch den Fahrer vermieden werden. Dieser kann sich dann auch deutlich besser auf das Verkehrsgeschehen konzentrieren.

Bei einer alternativen Ausgestaltung, die nicht unter den Umfang der Erfindung fällt, umfasst das vorgegebene Kriterium, dass das Kraftfahrzeug eine Entfernung zum Ziel aufweist, die kleiner ist als ein vorgebbarer Entfernungsschwellwert. Dieser Entfernungsschwellwert liegt vorzugsweise maximal bei 10 km oder im einstelligen Kilometerbereich. Beispielsweise kann dieser bei drei Kilometern oder zwischen fünf und zehn Kilometern liegen. Dieser Entfernungsschwellwert kann optional auch von einem Benutzer beziehungsweise Fahrer des Fahrzeugs konfigurierbar sein. Zudem kann die Entfernung dabei als Luftlinie gemessen werden oder als Entfernung entlang der Navigationsroute bis zum Ziel. Zusätzlich kann es auch vorgesehen sein, dass die Eingabeaufforderung, sofern dieses Entfernungskriterium erfüllt ist, dann ausgegeben wird, wenn sich das Kraftfahrzeug an einem von mehreren vorgebbaren speziellen Orten befindet, wie zum Beispiel einer Autobahnabfahrt, an einem Ortseingang eines das Ziel umfassenden Orts oder einem Beginn eines das Ziel umfassenden Ortsteils. In diesen geringen Entfernungsbereichen ist es sehr wahrscheinlich, dass sich ein Fahrer bereits auskennt, vor allem wenn es sich bei dem Ziel um ein häufig angefahrenes Ziel handelt.

Erfindungsgemäß umfasst das vorgegebene Kriterium, dass eine prognostizierte Fahrzeit des Kraftfahrzeugs von einer aktuellen Position des Kraftfahrzeugs zum Ziel entlang der Navigationsroute kleiner ist als ein vorgebbarer Zeitschwellwert. Es kann also nicht nur ein räumliches Entfernungskriterium, sondern alternativ oder zusätzlich auch ein zeitliches Entfernungskriterium vorgesehen sein, um die Ausgabe der Eingabeaufforderung auszulösen. Auch ein solcher Zeitschwellwert kann optional von einem Fahrer beziehungsweise Benutzer selbst konfigurierbar, zum Beispiel über ein Konfigurationsmenü des Navigationssystems, sein. Ein räumliches Entfernungskriterium hat jedoch gegenüber einem zeitlichen den Vorteil, dass dies unabhängig von einem eventuellen Stau oder hohem Verkehrsaufkommen entlang der Route ist.

Bei einer weiteren vorteilhaften Ausgestaltung der Erfindung wird die Eingabeaufforderung unter der Voraussetzung ausgegeben, dass sich das Kraftfahrzeug mindestens einmal zu einem früheren Zeitpunkt in einem vorbestimmten Bereich um das Ziel befunden hat. Optional kann es eine weitere Voraussetzung sein, dass sich das Kraftfahrzeug eine bestimmte Mindestanzahl an Malen zu einem früheren Zeitpunkt in dem vorbestimmten Bereich um das Ziel befunden hat. Zu diesem Zweck können Fahrdaten aufgezeichnet und ausgewertet werden. Dies ist besonders vorteilhaft, da anhand der Tatsache, ob sich das Kraftfahrzeug zu früheren Zeitpunkten bereits einmal oder sogar mehrmals am Zielort oder in dessen unmittelbarer Nähe befunden hat, noch zuverlässiger beurteilt werden kann, ob sich der Fahrer im Bereich des Ziels auskennt oder nicht. Entsprechend kann die Eingabeaufforderung zum Beispiel auch nur dann ausgegeben werden, wenn mit hoher Wahrscheinlichkeit davon ausgegangen werden kann, dass sich der Fahrer tatsächlich im Bereich des Ziels auch auskennt, wie zum Beispiel bei einer häufig gefahrenen Pedelstrecke der Fall sein kann. Wird ein bestimmter Zielort vom Kraftfahrzeug das erste Mal angefahren, so kann hingegen davon ausgegangen werden, dass es unwahrscheinlich ist, dass sich der Fahrer am Zielort tatsächlich auskennt. In diesem Fall kann entsprechend auf das Ausgeben der Eingabeaufforderung zur vorzeitigen Beendigung der Zielführung verzichtet werden, d.h. diese wird in diesem Fall nicht ausgegeben. Hierdurch kann der Bedienkomfort für den Fahrer weiter gesteigert werden, da der Bedienvorschlag zur vorzeitigen Beendigung der Zielführung im Rahmen der Eingabeaufforderung aller Wahrscheinlichkeit nur dann ausgegeben wird, wenn der Fahrer auch davon Gebrauch machen möchte.

Bei einer weiteren vorteilhaften Ausgestaltung der Erfindung wird die Eingabeaufforderung unter der Voraussetzung ausgegeben, dass eine Funktion zur Ausgabe der Eingabeaufforderung zum vorzeitigen Beenden der Zielführung durch einen Benutzer aktiviert wurde, insbesondere vor einem Starten der Zielführung. Mit anderen Worten kann die beschriebene Funktion vom Benutzer manuell aktivierbar oder auch deaktivierbar sein. Ist diese Funktion deaktiviert, so wird kurz vor dem Erreichen eines Ziels, selbst dann, wenn es sich um ein häufig angefahrenes Ziel handelt, keine Eingabeaufforderung zur vorzeitigen Beendigung der Zielführung ausgegeben. Dies ist zum Beispiel vorteilhaft, wenn ein Fahrzeug von verschiedenen Fahrern genutzt wird und ein Ziel angefahren wird, welches von einem der Fahrer sehr häufig angefahren wird, von einem anderen der Fahrer jedoch nicht, der entsprechend auch eine Zielführung bis letztendlich zum Erreichen des Ziels aktiviert haben möchte.

Bei einer weiteren vorteilhaften Ausgestaltung der Erfindung wird die Eingabeaufforderung als eine optische Anzeige auf einer Anzeigeeinrichtung des Kraftfahrzeugs ausgegeben und/oder akustisch ausgegeben. Eine Anzeigeeinrichtung des Kraftfahrzeugs kann zum Beispiel durch ein Display des Kraftfahrzeugs bereitgestellt sein. Ein solches Display kann zum Beispiel auch als Head-up-Display ausgebildet sein oder als zentrales Display im Mittelkonsolenbereich des Kraftfahrzeugs, und zum Beispiel als LCD-Display, OLED-Display oder ähnliches ausgebildet sein.

Auch die bestimmte Eingabe des Fahrers kann über eine solche Anzeigeeinrichtung, die dann zum Beispiel gleichzeitig als Touchscreen ausgebildet sein kann, getätigt werden oder manuell über ein anderes Bedienelement im Kraftfahrzeug. Die bestimmte Eingabe kann vom Fahrer aber auch in Form einer Spracheingabe getätigt werden. Die Eingabeaufforderung kann zum Beispiel als Frage formuliert sein, ob die Zielführung vorzeitig beendet werden soll. Diese Frage kann mit Ja oder Nein durch den Fahrer, insbesondere im Rahmen einer Spracheingabe oder wie beschrieben durch ein Bedienelemente oder über einen Touchscreen beantwortet werden, insbesondere durch Ja oder Nein.

Bei einer weiteren vorteilhaften Ausgestaltung der Erfindung wird die Eingabeaufforderung als Pop-up-Fenster auf einer Anzeigeeinrichtung des Kraftfahrzeugs unabhängig von einer Navigationsanzeige zum Anzeigen zumindest eines Teils der Navigationsroute ausgegeben. Ein solches Pop-up-Fenster kann dem Fahrer zum Beispiel über ein Head-up-Display direkt eingeblendet werden oder auf einer anderen Anzeigeeinrichtung, wie bereits beschrieben. Dadurch fällt eine solche Eingabeaufforderung dem Fahrer besonders gut ins Auge. Dabei muss dieses Pop-up-Fenster nicht notwendigerweise im Anzeigebereich der Navigationsanzeige erscheinen, sondern kann zum Beispiel auch in einem nebenstehenden Bereich erscheinen oder vollkommen unabhängig davon, ob überhaupt gerade eine Navigationsanzeige dem Fahrer angezeigt wird. Die Zielführung kann zum Beispiel auch lediglich im Hintergrund laufen und entsprechenden Navigationshinweise können dem Benutzer zum Beispiel auch nur über eine Sprachausgabe ausgegeben werden. Auch in einem solchen Fall ist es möglich, dennoch ein solches Pop-up-Fenster aufzuschalten, d.h. auf einer Anzeigeeinrichtung anzuzeigen, insbesondere unabhängig von dem durch diese zu diesem Zeitpunkt aktuell dargestellten Inhalt, der vom Pop-up-Fenster temporär überdeckt werden kann. Diese dominante Erscheinung der Eingabeaufforderung erleichtert dem Fahrer die Wahrnehmung dieser.

Des Weiteren betrifft die Erfindung auch ein Fahrerassistenzsystem für ein Kraftfahrzeug zum Bereitstellen einer Zielführung für einen Fahrer des Kraftfahrzeugs entlang einer bereitgestellten Navigationsroute von einem Start zu einem Ziel, wobei das Fahrerassistenzsystem dazu ausgelegt ist zu überprüfen, ob sich das Kraftfahrzeug in gemäß einem vorgebbaren Kriterium vorbestimmter Nähe zum Ziel befindet und falls das Überprüfen ergibt, dass sich das Kraftfahrzeug gemäß dem vorgegebenen Kriterium in der vorbestimmten Nähe zum Ziel befindet, eine Information an den Fahrer auszugeben. Weiterhin ist das Fahrerassistenzsystem dazu ausgelegt, als Teil der an den Fahrer ausgegebenen Informationen eine Eingabeaufforderung an den Fahrer zur vorzeitigen Beendigung der Zielführung auszugeben und zu überprüfen, ob eine bestimmte Eingabe des Fahrers zur vorzeitigen Beendigung der Zielführung erfasst wurde und falls die bestimmte Eingabe erfasst wurde, die Zielführung zu beenden.

Die für das erfindungsgemäße Verfahren und seine Ausgestaltungen genannten Vorteile gelten in gleicher Weise für das erfindungsgemäße Fahrerassistenzsystem.

Zu der Erfindung gehören auch Weiterbildungen des erfindungsgemäßen Fahrerassistenzsystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Fahrerassistenzsystems hier nicht noch einmal beschrieben.

Des Weiteren betrifft die Erfindung auch ein Kraftfahrzeug mit einem erfindungsgemäßen Fahrerassistenzsystem oder einer seiner Ausgestaltungen.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Darstellung eines Kraftfahrzeugs mit einem Fahrerassistenzsystem zum Bereitstellen einer Zielführung gemäß einem Ausführungsbeispiel der Erfindung; und
- Fig. 2: ein Ablaufdiagramm zur Veranschaulichung eines Verfahrens zum Bereitstellen einer Zielführung gemäß einem Ausführungsbeispiel der Erfindung.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

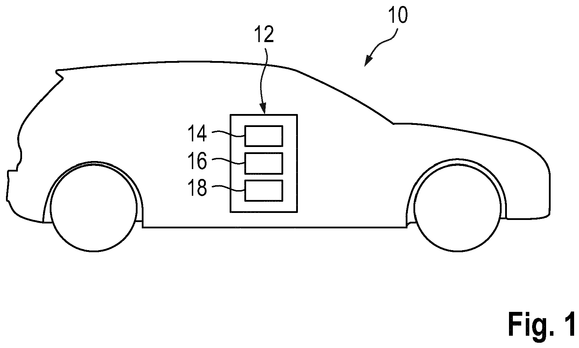

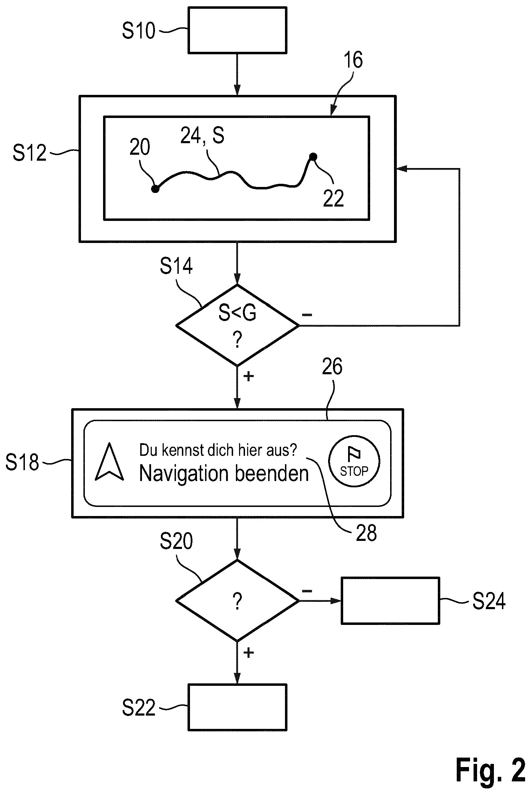

Fig. 1 zeigt eine schematische Darstellung eines Kraftfahrzeugs 10 mit einem Fahrerassistenzsystem 12 zum Bereitstellen einer Zielführung gemäß einem Ausführungsbeispiel der Erfindung. Das Fahrerassistenzsystem 12 kann hierzu ein Navigationssystem 14 mit einer Kartendatenbank, eine Anzeigeeinrichtung 16 und einen GPS-Empfänger 18 aufweisen. Die Anzeigeeinrichtung 16 kann dabei zum Beispiel gleichzeitig als Touchscreen ausgebildet sein und somit zusätzlich Bedienfunktionen zum Bedienen des Fahrerassistenzsystems 12 durch einen Benutzer bereitstellen. Mittels des GPS-Empfängers 18 kann das Fahrerassistenzsystem 12 die Position des Kraftfahrzeugs 10 bestimmen und zum Beispiel in den Kartendaten, die vom Navigationssystem 14 bereitgestellt werden, anzeigen. Gibt der Benutzer beziehungsweise Fahrer beispielsweise einen Zielort ein, so kann das Navigationssystem 14 eine Route bis zum Zielort ausgehend vom aktuellen Standort, der den Start definiert, ermitteln und ebenfalls auf der Anzeigeeinrichtung 16 anzeigen. Navigationshinweise können durch das Navigationssystem 14 ebenfalls über die Anzeigeeinrichtung 16 ausgegeben werden. Ein Verfahren zum Bereitstellen einer solchen Zielführung wird nun detaillierter anhand von Fig. 2 beschrieben. Fig. 2 zeigt dabei ein Ablaufdiagramm zur Veranschaulichung eines Verfahrens zum

Bereitstellen einer Zielführung. Das Verfahren startet hierbei in Schritt S10, in welchem die Zielführung zur Navigation eines Fahrers des Kraftfahrzeugs 10 von einem Start 20 zu einem Ziel 22 entlang einer bereitgestellten Navigationsroute 24 gestartet wird. Daraufhin wird in Schritt S12 eine aktuelle Position des Kraftfahrzeugs 10 ermittelt und auf Basis der aktuellen Position als neuer Startpunkt 20 die bereitgestellte Navigationsroute 24 aktualisiert. Damit einhergehend kann beispielsweise auch die Navigationsroute 24 oder zumindest ein Teil davon auf der Anzeigeeinrichtung 16 dargestellt werden, wie dies ebenfalls schematisch in Fig. 2 in Schritt S12 illustriert ist. Die Berechnungen und Aktualisierungen der Navigationsroute 24 müssen jedoch nicht notwendigerweise angezeigt werden, sondern können beispielsweise auch lediglich im Hintergrund ablaufen und lediglich dann, wenn ein Navigationshinweis, zum Beispiel zum Abbiegen, ausgegeben wird, kann eine entsprechende Anzeige erfolgen oder ein solcher Navigationshinweis auch lediglich als Sprachausgabe ausgegeben werden. Im vorliegenden Beispiel weist die restliche Navigationsroute 24 vom Start 20, welcher den aktuellen Standort des Kraftfahrzeugs 10 repräsentiert, zum Ziel 22 eine bestimmte Streckenlänge S auf. In Schritt S14, der nicht unter den Umfang der Erfindung fällt, wird überprüft, ob diese Streckenlänge S kleiner ist als ein vorbestimmter Schwellwert G. Dieser kann zum Beispiel zwischen drei und zehn Kilometern, zum Beispiel bei fünf Kilometern, liegen. Ist dies nicht der Fall, so wird wiederum zu Schritt S12 übergegangen. Dabei wird also die Navigationsroute 24 solange auf Basis des aktuellen Standorts des Kraftfahrzeugs 10 aktualisiert, bis, zumindest sofern sich das Kraftfahrzeug 10 entlang der ermittelten Navigationsroute 24 bewegt, die verbleibende Strecke S bis zum Ziel 22 kleiner ist als dieser Grenzwert G. In diesem Fall wird dann zu Schritt S18 übergegangen, in welchem eine Ausgabe, zum Beispiel über die Anzeigeeinrichtung 16, erfolgt, welche eine Eingabeaufforderung an den Fahrer zur vorzeitigen Beendigung der Zielführung umfasst. Eine solche Ausgabe kann zum Beispiel in Form eines Pop-up-Fensters 26 erscheinen. Dieses muss nicht notwendigerweise in der Navigationsanzeige erscheinen, sondern kann auch auf einem anderen Teilbereich des Bildschirms angezeigt werden, oder sogar auf einer anderen Anzeigeeinrichtung, zum Beispiel dem Kombiinstrument oder in einem Head-up-Display oder ähnliches. Die Ausgabe kann auch hier wiederum rein akustisch als Sprachausgabe gestaltet sein. Durch die Eingabeaufforderung, die im vorliegenden Beispiel als Frage, ob man sich hier auskennt und die Navigation beenden möchte, formuliert ist und mit 28 bezeichnet ist, wird der Fahrer also aufgefordert, sofern er die Navigation vorzeitig beenden möchte, eine entsprechende Bestätigungshandlung auszuführen. Diese kann als Spracheingabe oder Toucheingabe oder andere Eingabe ausgestaltet sein. In Schritt S20 wird überprüft, ob eine solche Eingabe erfasst wurde, durch welche der Fahrer signalisiert, dass er die Zielführung vorzeitig beenden möchte. Ist dies der Fall, so wird die Zielführung in Schritt S22 vorzeitig beendet, auch wenn der aktuelle Standort des Kraftfahrzeugs 10 noch nicht am vorbestimmten Ziel 22 angelangt ist. Führt der Benutzer eine solche Eingabe nicht aus beziehungsweise tätigt beispielsweise eine andere Eingabe, um zu signalisieren, dass keine vorzeitige Beendigung der Zielführung gewünscht ist, so wird zu Schritt S24 übergegangen, in welchem die Navigation fortgesetzt ist, insbesondere wie zu Schritt S12 beschrieben. Jedoch wird nun im Folgenden nicht mehr überprüft, ob die Reststrecke S bzw. deren Streckenlänge S kleiner als der vorbestimmte Grenzwert G ist, sondern die Navigation wird bis zum Erreichen des Ziels 22 fortgesetzt, oder beendet, falls ein anderes Abbruchkriterium erfüllt ist, wie beispielsweise dass ein Benutzer manuell durch eine aktive Bedienung, zum Beispiel über ein Menü, die Navigation beendet.

Durch den beschriebenen Bedienvorschlag zur vorzeitigen Beendigung der Navigation können dem Fahrer vorteilhafterweise Bedienschritte abgenommen werden, zumindest falls sich der Fahrer kurz vor dem Ziel örtlich auskennt. Dabei kann die Ausgabe dieser Eingabeaufforderung 28 noch an weitere optionale Kriterien geknüpft sein, wie beispielsweise, dass das Ziel 22 zu einem früheren Zeitpunkt bereits mindestens einmal angefahren wurde. Dies kann auf Basis gespeicherter, historischer Navigationsdaten und Routendaten überprüft werden. Je öfter ein solches gleiches Ziel 22 angefahren wurde, desto wahrscheinlicher ist es, dass sich der Fahrer im Bereich dieses Ziels 22 örtlich auskennt.

Insgesamt zeigen die Beispiele, wie durch die Erfindung Feedcards für einen intelligenten digitalen Assistenten für die Domäne Navigation bereitgestellt werden können, die situative und temporäre Bedienvorschläge, in diesem Fall zur vorzeitigen Beendigung der Navigation, bereitstellen, wodurch die Bedienung durch einen Fahrer des Kraftfahrzeugs deutlich erleichtert wird.

### Bezugszeichenliste

- 10: Kraftfahrzeug
- 12: Fahrerassistenzsystem
- 14: Navigationssystem
- 16: Anzeigeeinrichtung
- 18: GPS-Empfänger
- 20: Start
- 22: Ziel
- 24: Navigationsroute
- 26: Pop-up-Fenster
- 28: Eingabeaufforderung

- G: Schwellwert
- S: Streckenlänge

- S10: Schritt
- S12: Schritt
- S14: Schritt
- S18: Schritt
- S20: Schritt
- S22: Schritt
- S24: Schritt

## Patentansprüche

1. Verfahren zum Bereitstellen einer Zielführung für einen Fahrer eines Kraftfahrzeugs (10) entlang einer bereitgestellten Navigationsroute (24) von einem Start (20) zu einem Ziel (22), wobei überprüft wird, ob sich das Kraftfahrzeug (10) in gemäß einem vorgegebenen Kriterium vorbestimmter Nähe zum Ziel (22) befindet und falls das Überprüfen ergibt, dass sich das Kraftfahrzeug (10) gemäß dem vorgegebenen Kriterium in der vorbestimmten Nähe zum Ziel (22) befindet, eine Information (28) an den Fahrer ausgegeben wird, wobei die an den Fahrer ausgegebene Information (28) eine Eingabeaufforderung (28) an den Fahrer zur vorzeitigen Beendigung der Zielführung umfasst, und falls eine bestimmte Eingabe des Fahrers zur vorzeitigen Beendigung der Zielführung erfasst wird, die Zielführung beendet wird, wobei das vorgegebene Kriterium umfasst, dass eine prognostizierte Fahrzeit des Kraftfahrzeugs (10) von einer aktuellen Position des Kraftfahrzeugs (10) zum Ziel (22) entlang der Navigationsroute (24) kleiner ist als ein vorgebbarer Zeitschwellwert.

2. Verfahren nach Anspruch 1,
**dadurch gekennzeichnet, dass**
die Eingabeaufforderung (28) unabhängig von einer vorhergehenden Benutzereingabe zum Beenden der Zielführung ausgegeben wird.

3. Verfahren nach einem der vorhergehenden Ansprüche,
**dadurch gekennzeichnet, dass**
die Eingabeaufforderung (28) unter der Voraussetzung ausgegeben wird, dass sich das Kraftfahrzeug (10) mindestens einmal zu einem früheren Zeitpunkt in einem vorbestimmten Bereich um das Ziel (22) befunden hat.

4. Verfahren nach einem der vorhergehenden Ansprüche,
**dadurch gekennzeichnet, dass**
die Eingabeaufforderung (28) unter der Voraussetzung ausgegeben wird, dass eine Funktion zur Ausgabe der Eingabeaufforderung (28) zum vorzeitigen Beenden der Zielführung durch einen Benutzer aktiviert wurde, insbesondere vor einem Starten der Zielführung.

5. Verfahren nach einem der vorhergehenden Ansprüche,
**dadurch gekennzeichnet, dass**
die Eingabeaufforderung (28) als eine optische Anzeige auf einer Anzeigeeinrichtung (16) des Kraftfahrzeugs (10) ausgegeben wird und/oder akustisch ausgegeben wird.

6. Verfahren nach einem der vorhergehenden Ansprüche, **dadurch gekennzeichnet, dass**
die Eingabeaufforderung (28) als ein Pop-up-Fenster (26) auf einer Anzeigeeinrichtung (16) des Kraftfahrzeugs (10) unabhängig von einer Navigationsanzeige zum Anzeigen zumindest eines Teil der Navigationsroute (24) ausgegeben wird.

7. Fahrerassistenzsystem (12) für ein Kraftfahrzeug (10), zum Bereitstellen einer Zielführung für einen Fahrer des Kraftfahrzeugs (10) entlang einer bereitgestellten Navigationsroute (24) von einem Start (20) zu einem Ziel (22), wobei das Fahrerassistenzsystem (12) dazu ausgelegt ist zu überprüfen, ob sich das Kraftfahrzeug (10) in gemäß einem vorgebbaren Kriterium vorbestimmter Nähe zum Ziel (22) befindet und falls das Überprüfen ergibt, dass sich das Kraftfahrzeug (10) gemäß dem vorgegebenen Kriterium in der vorbestimmten Nähe zum Ziel (22) befindet, eine Information (28) an den Fahrer auszugeben, wobei das Fahrerassistenzsystem (12) dazu ausgelegt ist, als Teil der an den Fahrer ausgegebenen Information (28) eine Eingabeaufforderung (28) an den Fahrer zur vorzeitigen Beendigung der Zielführung auszugeben, und zu überprüfen, ob eine bestimmte Eingabe des Fahrers zur vorzeitigen Beendigung der Zielführung erfasst wurde und falls die bestimmte Eingabe erfasst wurde, die Zielführung zu beenden, wobei das vorgegebene Kriterium umfasst, dass eine prognostizierte Fahrzeit der Kraftfahrzeugs (10) von einer aktuellen Position des Kraftfahrzeugs (10) zum Ziel (22) entlang der Navigationsroute (24) kleiner ist als ein vorgebbarer Zeitschwellwert.

8. Kraftfahrzeug (10) mit einem Fahrerassistenzsystem (12) nach Anspruch 7.

## Claims

1. Method for providing destination guidance to a driver of a motor vehicle (10) along a provided navigation route (24) from a start (20) to a destination (22), wherein it is checked whether the motor vehicle (10) is within a proximity to the destination (22) that is predetermined according to a specified criterion and if the check shows that the motor vehicle (10) is within the predetermined proximity to the destination (22) according to the specified criterion, information (28) is output to the driver, wherein
the information (28) output to the driver comprises an input prompt (28) to the driver to prematurely terminate the destination guidance, and if a specific input from the driver to prematurely terminate the destination guidance is detected, the destination guidance is terminated, wherein the specified criterion comprises a predicted travel time of the motor vehicle (10) from a current position of the motor vehicle (10) to the destination (22) along the navigation route (24) being less than a specifiable time threshold value.

2. Method according to claim 1,
**characterized in that**
the input prompt (28) is output independently of any previous user input to terminate the destination guidance.

3. Method according to either of the preceding claims,
**characterized in that**
the input prompt (28) is output on the condition that the motor vehicle (10) has been in a predetermined region around the destination (22) at least once at an earlier point in time.

4. Method according to any of the preceding claims,
**characterized in that**
the input prompt (28) is output on the condition that a function for outputting the input prompt (28) to prematurely terminate the destination guidance has been activated by a user, in particular before the destination guidance has been started.

5. Method according to any of the preceding claims,
**characterized in that**
the input prompt (28) is output as an optical display on a display device (16) of the motor vehicle (10) and/or is output acoustically.

6. Method according to any of the preceding claims,
**characterized in that**
the input prompt (28) is output as a pop-up window (26) on a display device (16) of the motor vehicle (10) independently of a navigation display for showing at least a part of the navigation route (24).

7. Driver assistance system (12) for a motor vehicle (10), for providing destination guidance to a driver of the motor vehicle (10) along a provided navigation route (24) from a start (20) to a destination (22), wherein the driver assistance system (12) is designed to check whether the motor vehicle (10) is within a proximity to the destination (22) that is predetermined according to a specifiable criterion and if the check shows that the motor vehicle (10) is within the predetermined proximity to the destination (22) according to the specified criterion, to output information (28) to the driver, wherein
the driver assistance system (12) is designed to output, as part of the information (28) output to the driver, an input prompt (28) to the driver to prematurely terminate the destination guidance, and to check whether a specific input from the driver to prematurely terminate the destination guidance has been detected and if the specific input has been detected, to terminate the destination guidance, wherein the specified criterion comprises a predicted travel time of the motor vehicle (10) from a current position of the motor vehicle (10) to the destination (22) along the navigation route (24) being less than a specifiable time threshold value.

8. Motor vehicle (10) comprising a driver assistance system (12) according to claim 7.

## Revendications

1. Procédé pour la mise à disposition d'un guidage vers une destination pour un conducteur d'un véhicule automobile (10) le long d'un itinéraire de navigation (24) mis à disposition, d'un départ (20) à une destination (22), dans lequel on vérifie si le véhicule automobile (10) se trouve à une proximité prédéterminée de la destination (22) selon un critère prédéfini et, si la vérification montre que le véhicule automobile (10) se trouve à la proximité prédéterminée de la destination (22) selon le critère prédéfini, une information (28) est émise au conducteur, dans lequel
l'information (28) émise au conducteur comprend une demande d'entrée (28) au conducteur pour mettre fin prématurément au guidage vers la destination, et si une entrée déterminée du conducteur pour mettre fin prématurément au guidage vers la destination est détectée, le guidage vers la destination prend fin, dans lequel le critère prédéfini comprend le fait qu'un temps de trajet pronostiqué du véhicule automobile (10) d'une position actuelle du véhicule automobile (10) à la destination (22) le long de l'itinéraire de navigation (24) est inférieur à une valeur seuil de temps pouvant être prédéfinie.

2. Procédé selon la revendication 1,
**caractérisé en ce que**
la demande d'entrée (28) est émise indépendamment d'une entrée utilisateur précédente pour mettre fin au guidage vers la destination.

3. Procédé selon l'une des revendications précédentes,
**caractérisé en ce que**
la demande d'entrée (28) est émise à condition que le véhicule automobile (10) se soit trouvé au moins une fois à un moment antérieur dans une zone prédéterminée autour de la destination (22).

4. Procédé selon l'une des revendications précédentes,
**caractérisé en ce que**
la demande d'entrée (28) est émise à condition qu'une fonction pour l'émission de la demande d'entrée (28) pour mettre fin prématurément au guidage vers la destination par un utilisateur ait été activée, en particulier avant un démarrage du guidage vers la destination.

5. Procédé selon l'une des revendications précédentes,
**caractérisé en ce que**
la demande d'entrée (28) est émise sous forme d'affichage optique sur un appareil d'affichage (16) du véhicule automobile (10) et/ou est émise de manière acoustique.

6. Procédé selon l'une des revendications précédentes,
**caractérisé en ce que**
la demande d'entrée (28) est émise sous forme de fenêtre contextuelle (26) sur un appareil d'affichage (16) du véhicule automobile (10), indépendamment d'un affichage de navigation, pour afficher au moins une partie de l'itinéraire de navigation (24).

7. Système d'aide à la conduite (12) pour un véhicule automobile (10), pour la mise à disposition d'un guidage vers une destination pour un conducteur du véhicule automobile (10) le long d'un itinéraire de navigation (24) mis à disposition, d'un départ (20) à une destination (22), dans lequel le système d'aide à la conduite (12) est configuré pour vérifier si le véhicule automobile (10) se trouve à une proximité prédéterminée de la destination (22) selon un critère pouvant être prédéfini et, si la vérification montre que le véhicule automobile (10) se trouve à la proximité prédéterminée de la destination (22) selon le critère prédéfini, pour émettre une information (28) au conducteur, dans lequel
le système d'aide à la conduite (12) est configuré pour émettre, en tant que partie d'information (28) émise au conducteur, une demande d'entrée (28) au conducteur pour mettre fin prématurément au guidage vers la destination, et pour vérifier si une entrée déterminée du conducteur pour mettre fin prématurément au guidage vers la destination a été détectée et, si l'entrée déterminée a été détectée, pour mettre fin au guidage vers la destination, dans lequel le critère prédéfini comprend le fait qu'un temps de trajet pronostiqué du véhicule automobile (10) d'une position actuelle du véhicule automobile (10) à la destination (22) le long de l'itinéraire de navigation (24) est inférieur à une valeur seuil de temps pouvant être prédéfinie.

8. Véhicule automobile (10) comportant un système d'aide à la conduite (12) selon la revendication 7.
